# EUROPEAN PATENT SPECIFICATION

(11) **EP 1 231 408 B1**
(45) Date of publication and mention of the grant of the patent: **25.05.2005**
(21) Application number: 02002797.5
(22) Date of filing: 07.02.2002
(51) Int. Cl.: F16G 13/04, F16H 7/06

(54) **Silent chain, sprocket for silent chain and silent chain transmission device**
Zahnkette, Zahnrad und Zahnkettentrieb
Chaine à dents, roue dentée et transmission par chaine à dents

(30) Priority: 09.02.2001 JP 2001034284
(43) Date of publication of application: 14.08.2002
(73) Proprietor: Tsubakimoto Chain Co., Osaka 530-0018, (JP)
(72) Inventor: Okabe, Isamu, Komatsubara-cho, Kita-ku, Osaka 530-0018 (JP); Inoue, Kozo, Komatsubara-cho, Kita-ku, Osaka 530-0018 (JP)
(74) Representative: Maisch, Thomas, Dr. rer. nat.

(56) References cited:
- US-A- 1 709 802
- US-A- 2 525 561
- US-A- 2 602 344

## Description

### BACKGROUND OF THE INVENTION

### Field of the Invention

The present invention relates to a silent chain transmission device that is made up of a silent chain used for power transmission such as a timing drive of an automobile and a motorcycle, or a chain drive of a general purpose engine, a diesel engine and an industrial machine, and a sprocket for the silent chain.

### Prior Art

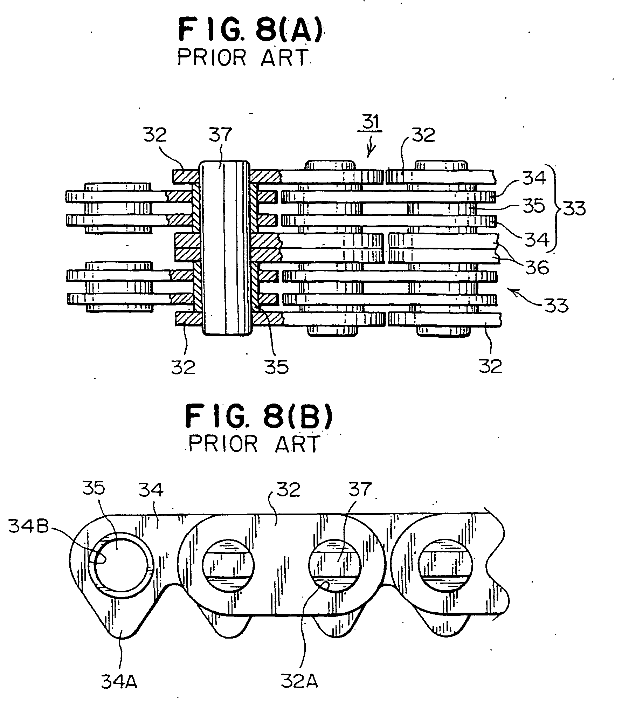

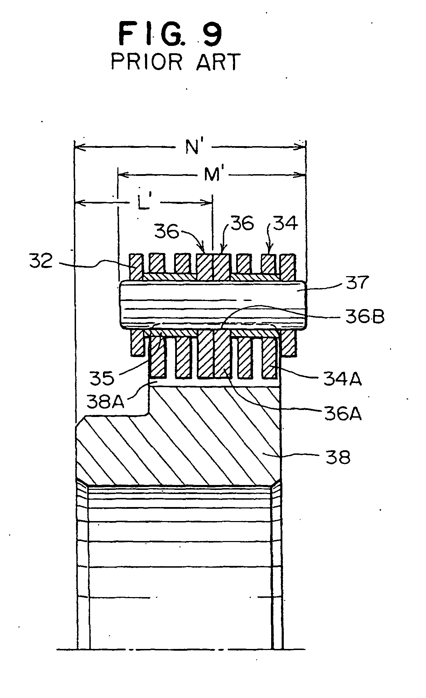

A silent chain transmission device has been widely known in which a silent chain is wound to a drive sprocket and a follower sprocket to transmit power (for example, refer to Japanese Patent No. 3096267, Japanese Utility Model Application No. 2553206). A silent chain 31 attached with a bushing is shown in Figs. 8 and 9 as an example of the silent chain used in a conventional silent chain transmission device. In the silent chain 31, guide plates 32, link assemblies 33 and middle link plates 36 are arranged in a chain width direction as shown in Figs. 8(A) and 8(B), assembled in a longitudinal direction shifting their positions with each other, that is, assembled in an interlinked manner, and connected by a connection pin 37 freely bendably.

The guide plate 32 does not include an engage tooth but has a pair of pin holes 32A. The link assembly 33 is one in which two inner link plates 34 having a pair of teeth 34A that engage with teeth 38A of a sprocket 38 and a pair of bushing holes 34B are connected and integrally formed by two (that is, a pair of) bushings 35. In this case, the bushings 35 are fitted and fixed to a pair of bushing holes 34B formed on the inner link plates 34. Further, the middle link plate 36 has a pair of teeth 36A that engage with the teeth 38A of the sprocket 38 and a pair of pin holes 36B.

In the silent chain 31, two middle link plates 36 are arranged in the center of a chain width direction, the link assemblies 33 are arranged at both outsides thereof, the guide plates 32 are arranged at both outermost sides as shown in Figs. 8(A) and 9, and they are assembled in the interlinked manner and connected by the connection pin 37 freely bendably. In this case, the connection pin 37 is fitted and fixed to the both outermost guide plates 32 through the pin holes 32A. Further, the guide plates 32 has a function to maintain a traveling line so as to sandwich the sprocket 38 from outside when the silent chain 31 is wound to the sprocket 38.

US-A-2 525 561 is showing a silent chain, comprising a link assembly in which at least two inner link plates having a pair of teeth that engage with sprocket teeth. A guide plate having a pair of pin holes is arranged inside a chain width direction and at least one link assembly is arranged on each of both outsides of the guide plate. Outer link plates having a pair of pin holes and are arranged on outermost sides.

US-A-2 602 344 is showing a sprocket for a silent chain, wherein a groove capable of inserting a guide plate, which is arranged inside a silent chain width direction, is formed with a ring shape inside an outer circumference width direction of a sprocket.

As in the foregoing, since the conventional silent chain has two rows of the guide plates arranged in a longitudinal direction at the both outermost sides in the chain width direction, there exists a problem that overall number of parts becomes large, a weight becomes heavy and a cost increases accordingly. Further, since the guide plates are provided at the both outermost sides, a chain width widens. For example, when it is used as a timing chain for an automobile engine, there exists a problem that the silent chain is not housed in an installation space inside the engine, or that a length or a width of the engine itself becomes larger in order to solve this problem. As a result, there exists a problem of causing an increase of an engine weight, an increase of an external body shape and an increase of cost.

### SUMMARY OF THE INVENTION

The object of the present invention is to solve the foregoing problems and achieve width reduction, reduction of the number of parts and weight reduction of a silent chain transmission device.

To achieve the foregoing object, in the silent chain transmission device of the present invention a silent chain wound to a drive sprocket and a follower sprocket transmits power, the silent chain has a configuration that the link assemblies, in which at least two inner link plates having a pair of teeth that engage with the sprocket teeth are connected with a pair of bushings, the guide plate having a pair of pin holes and the outer link plates having a pair of teeth that engage with the sprocket teeth are assembled in an interlinked manner and connected by the connection pin freely bendably and that the guide plate is arranged inside the chain width direction, at least one link assembly is arranged on each of both outsides of the guide plate, and the outer link plates are arranged on outermost sides, and each sprocket has a configuration that the grooves capable of inserting the guide plate therein arranged inside the silent chain width direction is formed on its circumference with a ring shape. In the silent chain of the present invention, the guide plate is arranged inside the chain width direction, the link assemblies are arranged at the both outsides of the guide plate, and the outer link plates are arranged in the both outermost sides. Therefore, when the silent chain is wound to the sprocket that has the groove of ring shape inside its circumference width direction, the silent chain travels on the sprocket with the guide plate in the inside inserted into the groove, and the traveling line is thus maintained. Since the silent chain has only one row of the guide plates provided in a longitudinal direction of chain, a chain width is narrowed and the number of guide plates are reduced, and thus the weight of chain is reduced, comparing to the conventional silent chain in which the guide plates are provided to the both outsides.

### BRIEF DESCRIPTION OF THE DRAWINGS

Fig. 1(A) is a plan view showing a part of a silent chain according to an embodiment of the present invention.
Fig. 1(B) is a side view showing the silent chain according to the embodiment.
Fig. 2 is a side view showing a guide plate according to the embodiment.
Fig. 3(A) is a side view showing a link assembly according to the embodiment.
Fig. 3(B) is a cross-sectional view showing the link assembly according to the embodiment.
Fig. 4 is a side view showing an outer link plate according to the embodiment.
Fig. 5 is a partially broken cross-sectional view showing a state where the silent chain is wound to the sprocket according to the embodiment. Fig. 6 is a cross-sectional view showing the sprocket according to the embodiment.
Fig. 7 is a schematic plan view showing a silent chain transmission device according to the embodiment.
Fig. 8(A) is a plan view showing a conventional silent chain where a part thereof is shown in a cross-sectional view.
Fig. 8(B) is a side view showing the conventional silent chain.
Fig. 9 a partially broken cross-sectional view showing a state where the conventional silent chain is wound to the sprocket.

### PREFERRED EMBODIMENTS OF THE INVENTION

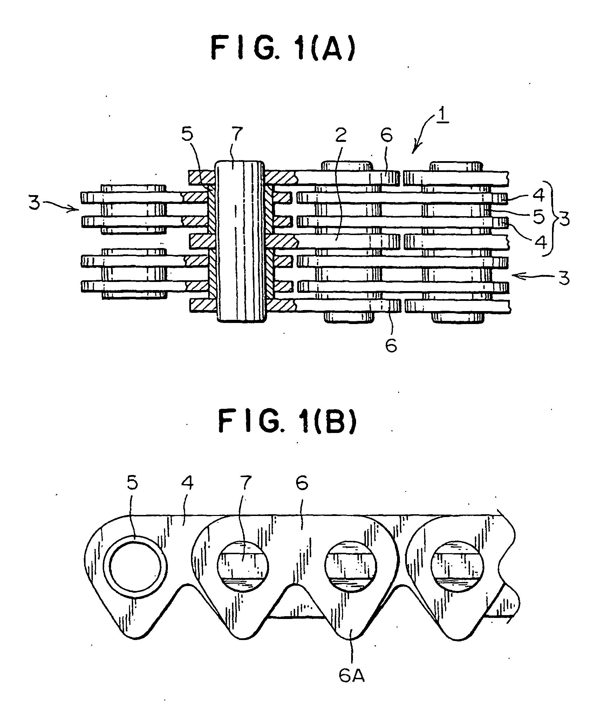

Embodiments of the present invention will be described with reference to Figs. 1 to 7. Figs. 1(A) and 1(B) show a silent chain 1 attached with bushings. In the silent chain 1, guide plate 2, link assemblies 3 and outer link plates 6 are arranged in the chain width direction, assembled in the longitudinal direction shifting their positions with each other, that is, assembled in the interlinked manner, and connected by a connection pin 7 freely bendably.

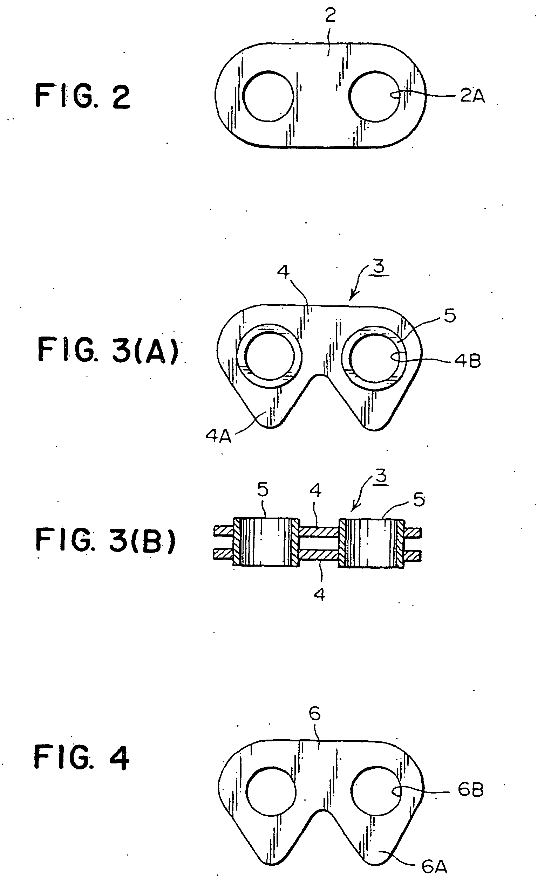

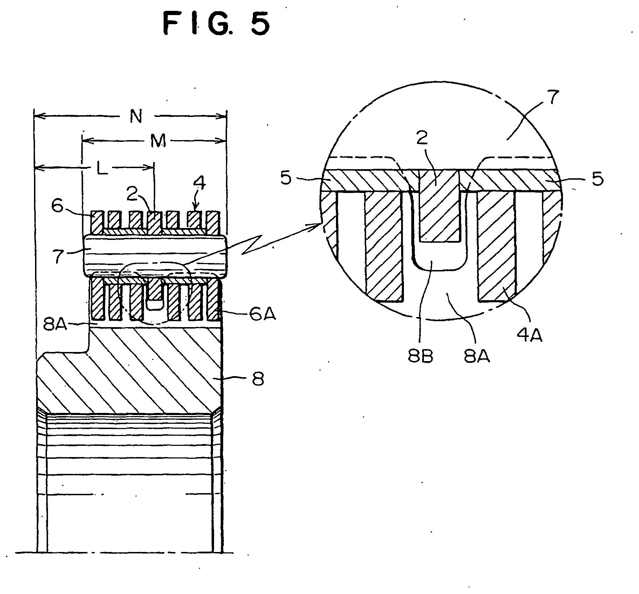

The guide plate 2 does not include a tooth that engages with the sprocket teeth but has a pair of pin holes 2A as shown in Fig. 2. The link assembly 3 is a unified structure in which two inner link plates 4 having a pair of teeth 4A that engage with the sprocket teeth and a pair of bushing holes 4B are connected and integrally formed by two (that is, a pair of) bushings 5. In this case, the bushings 5 are fitted and fixed to a pair of bushing holes 4B formed on the inner link plates 4. Further, the outer link plates 6 have a pair of teeth 6A that engage with the sprocket teeth and a pair of pin holes 6B as shown in Fig. 4.

In the silent chain 1, guide plate 2 is arranged in the center of the chain width direction, the link assemblies (3, 3) are arranged at both outsides thereof, and the outer link plates (6, 6) are arranged at outermost sides as shown in Figs. 1(A) and 5. In the guide plate 2 arranged in the center, the connection pin 7 is loosely fitted into the pin hole 2A and the guide plate 2 is freely rotatable to the connection pin 7. The link assembly 3 is freely rotatable to the connection pin 7 by the bushing 5 of a tubular shape. Furthermore, the connection pin 7 is fitted and fixed to the outer link plates 6 arranged on the both outermost sides through the pin holes 6B and the outer link plates do not rotate to the connection pin 7.

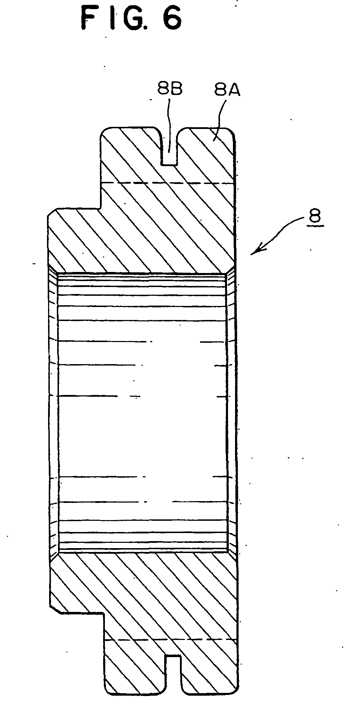

Fig. 6 shows the cross-sectional view of a sprocket 8 to which the silent chain 1 is wound. A groove 8B of a ring shape that looks like one where an engage tooth 8A is notched is formed on an outer circumference of the sprocket 8 in the center of the width direction. The groove 8B is used to maintain the traveling line of the silent chain 1 by allowing the guide plate 2 to be inserted therein when the silent chain 1 is wound to the sprocket 8 as shown in Fig. 5.

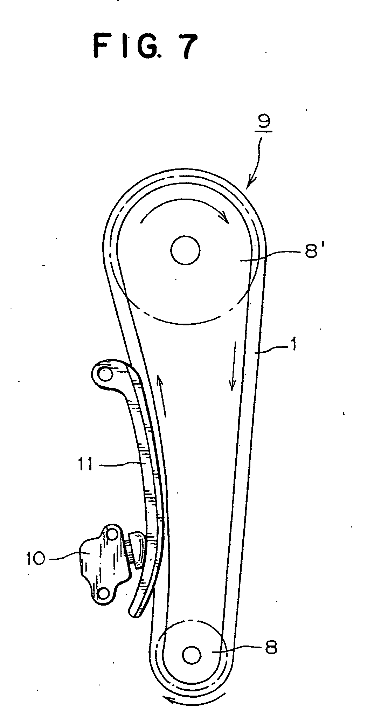

Fig. 7 shows the schematic plan view the silent chain transmission device in which the silent chain 1 and the sprocket 8 are combined. This silent chain transmission device 9 is a timing chain drive in which the silent chain 1 is wound to the drive crank sprocket 8 and a follower cam sprocket 8', and reference numerals 10 and 11 respectively denote a tensioner and a tensioner lever, which add appropriate tension to a traveling silent chain 1.

In the silent chain transmission device 9, the silent chain 1 is wound to the sprockets (8, 8') to travel, and the link assembly 3 rotates while using the connection pin 7 as a fulcrum from a time when the chain begins to be engaged with the sprockets (8, 8') to an ending time when the chain is released. Then, the sprockets (8, 8') include the grooves 8B of a ring shape on circumferences thereof, the guide plate 2 arranged in the center of the silent chain 1 is inserted into the groove 8B, and thus the silent chain 1 travels without deviating from the traveling line of chain.

In the silent chain 1, the guide plate 2 is arranged in the center of chain width direction and only one row of the guide plates 2 is provided in the center in a longitudinal direction of chain as shown in Fig. 5. On the contrary, in the conventional silent chain 31 shown in Fig. 9, the guide plate 32 is arranged on the outermost sides of chain width direction and two rows of the guide plates 32 are provided. Therefore, as shown in Figs. 5 and 9, L<L', M<M' and N<N' are established, and a chain width M of the silent chain 1 can be made narrower than a chain width M' of the silent chain 32. Accordingly, the width (N<N') of the silent chain transmission device 9 can be made narrower when the silent chain 1 is used.

In the foregoing embodiment, description has been made for the silent chain 1 in which the guide plate 2 is arranged in the center of chain width direction. However, there is a case where a plurality of link assemblies are arranged in the silent chain width direction. In such a case, the arrangement position of the guide plate 2 is not only limited to the center but may be inside the chain width direction. For example, in a silent chain in which three link assemblies 3 are arranged in the chain width direction, the guide plate 2 is arranged between the link assembly 3 and the link assembly 3, that is, at a position off to the outside from the center of the chain width direction, and the middle link plate (one corresponds to the middle link plate 36 in Figs. 8 and 9) is arranged between the link assembly 3 and the link assembly 3 where the guide plate 2 is not arranged. In short, the guide plate 2 may be arranged inside the chain width direction, and it is preferable that the guide plate 2 is arranged closer to the center than the link assembly 3. Furthermore, the groove 8B provided in the sprocket 8 is formed at a position that corresponds to the guide plate 2 of the silent chain. Description has been made for the guide plate 2 in which the connection pin 7 is loosely fitted into the pin hole 2A and the guide plate 2 is freely rotatable to the connection pin 7. However, the connection pin 7 may be fitted and fixed to the pin hole 2A of the guide plate 2 and guide plate 2 may not rotate to the connection pin 7.

Description has been made for the link assembly in which the bushing connects two inner link plates, but it may be formed by a plurality, that is, at least two or more inner link plates. Further, the silent chain transmission device is not limited to the timing chain drive of the embodiment, but may be a transmission device that transmits power by a silent chain wound to the drive sprocket and the follower sprocket.

As described above, in the silent chain of the present invention, the link assemblies in which at least two inner link plates having a pair of teeth that engage with sprocket teeth are connected with a pair of bushings, the guide plate having a pair of pin holes, and the outer link plates having a pair of teeth that engage with the sprocket teeth and a pair of pin holes are assembled and connected by the connection pin freely bendably. Therefore, in the link assembly, the inner link plate and the connection pin do not contact directly but the bushing rotates as it contacts the pin so that abrasion of the connection pin is restrained and extension of chain due to abrasion is thus restrained.

Further, since the guide plate is arranged inside the chain width direction, at least one link assembly is arranged on each of both outsides of the guide plate, and the outer link plates are arranged on the outermost sides, one guide plate is provided in the chain width direction, that is, only one row of guide plates is provided in the longitudinal direction of chain. Thus, width reduction, reduction of the number of parts and weight reduction of the silent chain can be achieved comparing to the one like the conventional silent chain in which two rows of guide plates are provided in the longitudinal direction of chain, and cost can be reduced. Accordingly, the width of the silent chain transmission device can be made narrower.

Since the width of the silent chain or the silent chain transmission device can be made narrower, the silent chain or the silent chain transmission device can be installed in a narrow space inside an engine when they are used as the timing chain for an automobile. As a result, an increase of an engine weight, an increase of an external body shape and an increase of cost can be restrained.

Furthermore, the silent chain transmission device, in which the silent chain is wound to the sprocket having the groove of a ring shape inside the outer circumference width direction, travels by allowing the guide plate arranged inside the silent chain width direction to be inserted therein, the traveling line of the silent chain can be maintained.

## Claims

1. A silent chain transmission device (9) in which a silent chain (1) wound to a drive sprocket (8) and a follower sprocket (8') transmits power, wherein
said silent chain (1) comprises:
a link assembly (3), in which at least two inner link plates (4) having a pair of teeth (4A) that engage with sprocket teeth (8A) are connected with a pair of bushings (5);
a guide plate (2) having a pair of pin holes (2A);
an outer link plate (6) having a pair of teeth (6A) that engage with the sprocket teeth (8A); and
a connection pin (7) that assembles and connects the link assemblies (3), the guide plate (2) and the outer link plates (6) freely bendably, and has a configuration that the guide plate (2) is arranged inside a chain width direction, at least one link assembly (3) is arranged on each of both outsides of the guide plate (2), and the outer link plates (6) are further arranged on outermost sides, and
each of said sprockets (8) has a groove (8B) capable of inserting the guide plate (2) arranged inside silent chain width direction, the groove (8B) being formed on its circumference with a ring shape.

## Patentansprüche

1. Zahnketten-Übertragungsvorrichtung (9), bei der eine Zahnkette (1), die um ein Antriebskettenrad (8) und ein Abtriebskettenrad (8') gewunden ist, Kraft überträgt, wobei
die Zahnkette (1) umfasst:
eine Kettenglied-Anordnung (3), bei der zumindest zwei innere Kettenlaschen (4), die ein Paar von Zähnen (4A) aufweisen, die mit Kettenradzähnen (8A) eingreifen, mit einem Paar von Hülsen (5) verbunden sind,
eine Führungslasche (2), die ein Paar von Stiftlöchern (2A) aufweist,
eine äußere Kettenlasche (6), die ein Paar von Zähnen (6A) aufweist, die mit den Kettenradzähnen (8A) eingreifen und
einen Verbindungsstift (7), der die Kettenglied-Anordnungen (3), die Führungslasche (2) und die äußeren Kettenlaschen (6) frei schwenkbar zusammenfügt und verbindet, und eine Konfiguration aufweist, bei der die Führungslasche (2) innerhalb einer Breitenrichtung der Kette angeordnet ist, zumindest eine Kettenglied-Anordnung (3) auf jeder der beiden Außenseiten der Führungslasche (2) angeordnet ist und die äußeren Kettenlaschen (6) noch weiter an den äußersten Seiten angeordnet sind, und
wobei jedes der Kettenräder (8) ein Nut (8B) aufweist, die zum Einstecken der Führungslasche (2) geeignet ist, die innerhalb der Breitenrichtung der Zahnkette angeordnet ist, wobei die Nut (8B) in Ringform auf deren Umfang ausgebildet ist.

## Revendications

1. Un dispositif de transmission à chaîne silencieuse (9) dans lequel une chaîne silencieuse (1), enroulée sur un pignon à chaîne d'entraînement (8) et un pignon à chaîne suiveur (8'), transmet la puissance, dans lequel
ladite chaîne silencieuse (1) comprend :
un ensemble de chaînon (3) dans lequel au moins deux plaques de liaison intérieures (4), ayant une paire de dents (4A) qui viennent en prise avec des dents de pignon (8A), sont reliées par une paire de manchons (5) ;
une plaque de guidage (2) ayant une paire de trous de broche (2A) ;
une plaque de liaison extérieure (6) ayant une paire de dents (6A) qui viennent en prise avec les dents de pignon (8A) ; et
une broche de liaison (7) qui assemble et connecte les ensembles de chaînon (3), la plaque de guidage (2) et les plaques de liaison extérieures (6) de manière pliable librement et qui a une configuration telle que la plaque de guidage (2) est disposée à l'intérieur d'une direction de la largeur de la chaîne, au moins un ensemble de chaînon (3) est disposé sur chacun des deux extérieurs de la plaque de guidage (2) et les plaques de liaison extérieures (6) sont en outre disposées sur les côtés les plus extérieurs et
chacun desdits pignons à chaîne (8) a une rainure (8B) capable d'insérer la plaque de guidage (2) disposée à l'intérieur de la direction de la largeur de la chaîne silencieuse, la rainure (8B) étant formée sur sa circonférence en forme d'anneau.
